# EUROPÄISCHE PATENTSCHRIFT

(11) **EP 1 943 084 B1**
(45) Veröffentlichungstag und Bekanntmachung des Hinweises auf die Patenterteilung: **02.02.2011**
(21) Anmeldenummer: 06806771.9
(22) Anmeldetag: 15.09.2006
(51) Int. Cl.: B29C 65/14

(54) **DURCH SCHWEISSEN IM ELEKTROMAGNETISCHEN WECHSELFELD ERHÄLTLICHE KUNSTSTOFFVERBUNDFORMKÖRPER**
PLASTIC COMPOSITE MOULDED BODIES OBTAINABLE BY WELDING IN AN ELECTROMAGNETIC ALTERNATING FIELD
CORPS MOULES COMPOSITES PLASTIQUES OBTENUS PAR SOUDAGE DANS UN CHAMP ELECTROMAGNETIQUE ALTERNATIF

(30) Priorität: 14.10.2005 DE 102005049718
(43) Veröffentlichungstag der Anmeldung: 16.07.2008
(73) Patentinhaber: Evonik Degussa GmbH, 45128 Essen (DE)
(72) Erfinder: HÄGER, Harald, 593 48 Lüdinghausen (DE); PRIDÖHL, Markus, 63538 Grosskrotzenburg (DE); ZIMMERMANN, Guido, 50321 Brühl (DE); KUHMANN, Karl, 48249 Dülmen (DE); GÖRING, Rainer, 46325 Borken (DE)
(86) Internationale Anmeldenummer: PCT/EP2006/066405
(87) Internationale Veröffentlichungsnummer: WO 2007/042368

(56) Entgegenhaltungen:
- DE-A1- 10 210 661
- US-A- 5 338 611

## Beschreibung

Die Erfindung betrifft durch Schweißen im elektromagnetischen Wechselfeld erhältliche Kunststoffverbundformkörper, in denen der Schweißverbund mit Hilfe eines Kunststoffmaterials erfolgt, das nanoskalige, magnetische oxidische Partikel enthält.

Kunststoffformteile können mit den unterschiedlichsten Kunststoffschweißverfahren verbunden werden. Gängige Verfahren sind Heizelementschweißen, Heizwendelschweißen, Ultraschallschweißen, Vibrationsschweißen, Laserdurchstrahlschweißen, Rotationsreibschweißen und Hochfrequenzschweißen.

Fügeverfahren mittels elektromagnetischem Wechselfeld oder Mikrowelle werden seltener eingesetzt und gelten noch als Sonderverfahren.

Beim Laserdurchstrahlschweißen muß zumindest das der Strahlenquelle zugewandte Formteil für den Laserstrahl transparent sein, wodurch die Auswahl der infrage kommenden Kunststoffmaterialien bezüglich Pigmentierung und Farbstellung limitiert ist.

Beim Schweißen im elektromagnetischen Wechselfeld treten dagegen die Einschränkungen bezüglich der Farbmittel nicht auf.

Für das Schweißen mit elektromagnetischer Strahlung (Induktionsschweißen) wird üblicherweise ein Schweißhilfsmittel benötigt, das als solches oder aufgrund entsprechender Inhaltsstoffe magnetisch aktivierbar ist. Durch Hysterese- und/oder Wirbelstromverluste im elektromagnetischen Wechselfeld erwärmt sich das Schweißhilfsmittel, wobei der Energieeintrag bei der induktiven Erwärmung etwa 1500-fach höher als bei der Wärmeleitung ist. Das Induktionsschweißen durchläuft die Phasen Aufschmelzen, Schmelzfusion und Konsolidierung, wobei der Schweißprozess kontinuierlich oder diskontinuierlich durchgeführt werden kann.

Das Schweißhilfsmittel kann etwa in Form von Halbzeugen oder Folien zwischen den Fügeflächen der zu fügenden Formteile platziert werden. Die magnetische Aktivierbarkeit wird häufig durch metallische Einlagen bewirkt, was aber den Produktionsprozess der zu fügenden Kunstoffformteile verkompliziert und die gegebenenfalls im Folgeprodukt unerwünscht sind. Schweißhilfsmittel mit partikulären ferromagnetischen Füllstoffen sind relativ teuer und zeigen schlechte Wirkungsgrade, so dass sich das Verfahren gegenüber den etablierten Fügeverfahren bislang nicht durchsetzen konnte.

Der Erfindung lag daher die Aufgabe zugrunde, Kunststoffmaterialien zu entwickeln, die durch, entsprechende Additive magnetisch aktivierbar sind, um diese im elektromagnetischen Wechselfeld schweißbar zu machen. Diese Materialien sollten entweder als integrale Bestandteile der zu fügenden Kunstoffformteile oder als zusätzliche Schweißhilfsmittel einsetzbar sein.

In DE-A-19924138 wird eine Klebstoffzusammensetzung beansprucht, die unter anderem nanoskalige partikel mit superparamagnetischen Eigenschaften enthält.

In DE-A-10163399 wird eine nanopartikuläre Zubereitung beschrieben, die eine kohärente Phase und wenigstens eine darin dispergierte, teilchenförmige Phase superparamagnetischer, nanoskaliger Teilchen aufweist. Dabei sind Zubereitungen in Form einer Klebstoffzusammensetzung bevorzugt.

Die Zusammensetzungen von DE-A-19924138 und DE-A-10163399 sind im elektromagnetischen Wechselfeld erwärmbar.

Sowohl für DE-A-19924138 wie auch für DE-A-10163399 gilt, dass die eingesetzten Teilchen vorzugsweise oberflächenmodifiziert bzw. oberflächenbeschichtet sind, um eine Agglomeration oder ein Zusammenwachsen der nanoskaligen Teilchen zu verhindern und/oder um eine gute Dispergierbarkeit der teilchenförmigen Phase in der kohärenten Phase zu gewährleisten. Nachteilig hierbei ist, dass sich die zur Oberflächenbeschichtung bzw. Oberflächenmodifizierung eingesetzten Substanzen, insbesonderen bei hohen Temperaturen und/oder mechanischen Einflüssen, lösen können. Dies hat zur Folge, dass die nanoskaligen Teilchen agglomerieren oder zusammenwachsen können, wodurch deren superparamagnetischen Eigenschaften verloren gehen.

Die rheologischen Eigenschaften der nanopartikulären Zubereitung gemäß DE-A-10163399 oder der Klebstoffzusammensezung gemäß DE-A-19924138 lassen sich durch Art und Menge des Dispersionsmittels in einem weiten Bereich einstellen. Es ist jedoch nicht oder nur eingeschränkt möglich, die Rheolgie der Zubereitung durch die nanoskaligen, superparamagnetischen Teilchen selbst einzustellen, da die superparamagnetischen Eigenschaften an gewisse Partikelgrößen gebunden sind. Die Teilchen liegen in der Zubereitung nahezu als Primärpartikel vor, wodurch eine Einstellung der Rheologie, etwa eine Verdickung, nur durch gleichzeitige Variation des Gehaltes an superparamagnetischer Teilchen möglich ist.

Die DE10210661 A1 beschreibt eine Klebstoffzusammensetzung mit Füllstoffpartikeln, die metallisch, ferromagnetisch, ferrimagnetisch, superparamagnetisch oder paramagnetisch sind (Zusammenfassung). Diese Füllstoffpartikel sind oberflächenmodifiziert mit organischen Einheiten, die funktionelle Gruppen tragen, welche mit funktionellen Gruppen des Klebstoffs reagieren können (Abbildungen sowie Absatz 001 6). Da ein Partikel mehrere funktionelle Gruppen trägt, wirkt es als Vernetzer für den Klebstoff (Absätze 001 6 und 001 9). Es ist bekannt, dass eine organische Oberflächenmodifizierung von Nanopartikeln der Agglomeration der Partikel entgegenwirkt.

Als Klebstoff werden in der DE10210661 A1 insbesondere Epoxidharze, Polyurethane, Acrylate, Phenolharze, Polysulfide oder Melaminharze genannt (Absatz 001 4). Dies sind Zusammensetzungen von niedrigem Molekulargewicht, gegebenenfalls Präpolymere; sie besitzen daher eine niedrige Viskosität. Die Füllstoffpartikel können daher im Klebstoff leicht dispergiert werden. Beim Anlegen des Wechselfelds werden die Partikel auf eine Temperatur aufgeheizt, bei der die Vernetzungsreaktion zwischen den funktionellen Gruppen der Partikel und den funktionellen Gruppen des Klebstoffs abläuft.

In der früheren, nicht vorveröffentlichten deutschen Patentanmeldung DE 102004057830 vom 01.12.2004, auf die hier vollinhaltlich bezuggenommen wird, wird eine Klebstoffzusammensetzung beschrieben, enthaltend ein polymerisierbares Monomer und/oder ein Polymer und darin dispergiert superparamagnetische oxidische Partikel, die aus aggregierten Primärpartikeln bestehen, wobei die Primärpartikel aus magnetischen Metalloxid-Domänen mit einem Durchmesser von 2 bis 100 nm in einer nichtmagnetischen Metalloxid- oder Metalloidoxid-Matrix aufgebaut sind.

Überraschend wurde nun gefunden, daß nanoskalige, magnetische oxidische Partikel als Additive für Kunststoffmaterialien geeignet sind, um diese im elektromagnetischen Wechselfeld schweißbar zu machen.

Gegenstand der Erfindung ist demnach die Verwendung von nanoskaligen, magnetischen oxidischen Partikeln, die nicht-agglomerierte superparamagnetische Domänen aufweisen und aus aggregierten Primärpartikeln bestehen, wobei die Primärpartikel aus magnetischen Metalloxid-Domänen mit einem Durchmesser von 2 bis 100 nm in einer nichtmagnetischen Metalloxid- oder Metalloidoxid-Matrix aufgebaut sind, als Additive in Kunststoffmaterialien, um diese im elektromagnetischen Wechselfeld schweißbar zu machen.

Gegenstand der Erfindung ist weiterhin ein Verfahren zur Herstellung von Kunststoffverbundformkörpern durch Schweißen im elektromagnetischen Wechselfeld, bei dem der Schweißverbund mit Hilfe eines Kunststoffmaterials erfolgt, das nanoskalige, magnetische oxidische Partikel enthält, die nicht-agglomerierte superparamagnetische Domänen aufweisen und aus aggregierten Primärpartikeln bestehen, wobei die Primärpartikel aus magnetischen Metalloxid-Domänen mit einem Durchmesser von 2 bis 100 nm in einer nichtmagnetischen Metalloxid- oder Metalloidoxid-Matrix aufgebaut sind.

Gegenstand der Erfindung sind insbesondere durch Schweißen im elektromagnetischen Wechselfeld erhältliche Kunststoffverbundformkörper, bei denen der Schweißverbund mit Hilfe eines Kunststoffmaterials erfolgt, das nanoskalige, magnetische oxidische Partikel enthält, die nicht-agglomerierte superparamagnetische Domänen aufweisen und aus aggregierten Primärpartikeln bestehen, wobei die Primärpartikel aus magnetischen Metalloxid-Domänen mit einem Durchmesser von 2 bis 100 nm in einer nichtmagnetischen Metalloxid- oder Metalloidoxid-Matrix aufgebaut sind.

In den erfindungsgemäßen Kunststoffmaterialien liegen die nanoskaligen, magnetischen oxidischen Partikel weitestgehend homogen verteilt und insbesondere in nichtagglomerierter Form vor. Insbesondere sind diese Teilchen in den Kunststoffmaterialien temperaturstabil und zeigen auch bei hohen Temperaturen keine Agglomeration. Weiterhin ist es möglich, die Rheologie der Zusammensetzungen weitestgehend unabhängig vom Gehalt an solchen Partikeln zu steuern.

Unter aggregiert im Sinne der vorliegenden Erfindung sind dreidimensionale Strukturen von verwachsenen Primärpartikeln zu verstehen. Mehrere Aggregate können sich zu Agglomeraten verbinden. Diese Agglomerate lassen sich etwa durch mechanische Einwirkung, zum Beispiel bei Extrusionsvorgängen, leicht wieder trennen. Im Gegensatz hierzu ist die Zerlegung der Aggregate in die Primärpartikel in der Regel nicht möglich.

Der Aggregatdurchmesser der nanoskaligen, magnetischen oxidischen Partikel kann bevorzugt größer als 100 nm und kleiner als 1 µm sein.

Vorzugsweise können die Aggregate der nanoskaligen, magnetischen oxidischen Partikel wenigstens in einer Raumrichtung einen Durchmesser von nicht mehr als 250 nm aufweisen, etwa indem zwei Seitenarme eines Aggregates Durchmesser von 80 nm und 135 nm aufweisen.

Unter Domänen sind räumlich voneinander getrennte Bereiche in einer Matrix zu verstehen. Die Domänen der nanoskaligen, magnetischen Partikel haben einen Durchmesser zwischen 2 und 100 nm.

Die Domänen können auch nichtmagnetische Bereiche aufweisen, die aber dann keinen Beitrag zu den magnetischen Eigenschaften der Partikel leisten.

Zusätzlich können auch magnetische Domänen vorliegen, die aufgrund ihrer Größe keinen Superparamagnetismus zeigen und eine Remanenz induzieren. Dies führt zur Erhöhung der volumenspezifischen Sättigungsmagnetisierung. Gemäß der vorliegenden Erfindung gilt, dass die superparamagnetischen Partikel eine solche Anzahl an superparamagnetischen Domänen enthält, um die erfindungsgemäßen Kunststoffmaterialien mittels eines elektrischen, magnetischen oder elektromagnetischen Wechselfeldes auf Schmelztemperatur erhitzen zu können.

Die Domänen der superparamagnetischen Partikel können von der umgebenden Matrix vollständig oder nur teilweise umschlossen sein. Teilweise umschlossen heißt, daß einzelne Domänen aus der Oberfläche eines Aggregates herausragen können.

In jedem Fall sind die superparamagnetischen Domänen der Pertikel nicht-agglomeriert.

Die Domänen können ein oder mehrere Metalloxide aufweisen.

Die magnetischen Domänen können bevorzugt die Oxide von Eisen, Kobalt, Nickel, Chrom, Europium, Yttrium, Samarium oder Gadolinium enthalten. In diesen Domänen können die Metalloxide in einer einheitlichen Modifikation oder in verschiedenen Modifikationen vorliegen.

Eine besonders bevorzugte magnetische Domäne ist Eisenoxid in der Form von gamma-Fe₂O₃ (γ-Fe₂O₃), Fe₃O₄, Mischungen aus gamma-Fe₂O₃ (γ-Fe₂O₃) und/oder Fe₃O₄.

Die magnetischen Domänen können weiterhin als Mischoxid wenigstens zweier Metalle mit den Metallkomponenten Eisen, Kobalt, Nickel, Zinn, Zink, Cadmium, Magnesium, Mangan, Kupfer, Barium, Magnesium, Lithium oder Yttrium vorliegen.

Die magnetischen Domänen können weiterhin Stoffe mit der allgemein Formel M^{II}Fe₂O₄ sein, worin M^{II} für eine Metallkomponente steht, die wenigstens zwei voneinander verschiedene, zweiwertige Metalle umfasst. Bevorzugt kann eines der zweiwertigen Metalle Mangan, Zink, Magnesium, Kobalt, Kupfer, Cadmium oder Nickel sein.

Weiterhin können die magnetischen Domänen aus ternären Systemen der allgemeinen Formel (M^{a}_{1-x-y} M^{b}ₓFe_{y})^{II}Fe₂^{III}O₄ aufgebaut sein, wobei M^{a}, beziehungsweise M^{b} die Metalle Mangan, Kobalt, Nickel, Zink, Kupfer, Magnesium, Barium, Yttrium, Zinn, Lithium, Cadmium, Magnesium, Calcium, Strontium, Titan, Chrom, Vanadium, Niob, Molybdän sein, mit x = 0,05 bis 0,95, y = 0 bis 0,95 und x+y ≤1.

Besonders bevorzugt können ZnFe₂O₄, MnFe₂O₄, Mn_{0,6}Fe_{0,4}Fe₂O₄, Mn_{0,5}Zn_{0,5}Fe₂O₄, Zn_{0,1}Fe_{1,9}O₄, Zn_{0,2}Fe_{1,8}O₄, Zn_{0,3}Fe_{1,7}O₄, Zn_{0,5}Fe_{1,6}O_{4 .} oder Mn_{0,39}Zn_{0,27}Fe_{2,34}O₄, MgFe₂O₃, Mg_{1,2}Mn_{0,2}Fe_{1,6}O4, Mg_{1,4}Mn_{0,4}Fe_{1,2}O₄, Mg_{1,6}Mn_{0,6}Fe_{0,8}O₄, Mg_{1,8}Mn_{0,8}Fe_{0,4}O₄ sein.

Die Wahl des Metalloxides der nichtmagnetischen Matrix ist nicht weiter beschränkt. Bevorzugt können dies Oxide von Titan, Zirkon, Zink, Aluminium, Silicium, Cer oder Zinn sein.

Im Sinne der Erfindung zählen auch Metalloidoxide, wie beispielsweise Siliciumdioxid, zu den Metalloxiden.

Weiterhin können die Matrix und/oder die Domänen amorph und/oder kristallin vorliegen.

Der Anteil der magnetischen Domänen in den Partikeln ist nicht beschränkt, solange die räumliche Trennung von Matrix und Domänen gegeben ist. Vorzugsweise kann der Anteil der magnetischen Domänen in den superparamagnetischen Partikeln 10 bis 90 Gew.-% betragen.

Die erfindungsgemäßen Kunststoffmaterialien können bevorzugt einen Anteil an superparamagnetischen Partikeln in einem Bereich von 0,1 bis 40 Gew.-% aufweisen.

Geeignete superparamagnetische Partikel werden beispielsweise in EP-A-1284485 sowie in DE 10317067 beschrieben, auf die im vollen Umfang Bezug genommen wird.

Die superparamagnetischen oxidischen Partikel können demgemäß durch ein Verfahren erhalten werden, umfassend die Schritte:
- Gemeinsames oder getrenntes Verdampfen einer Verbindung, die die Metall- oder Metalloidkomponente der nichtmagnetischen Matrix enthält und einer Verbindung, die die Metallkomponente der superparamagnetischen Domänen enthält, wobei wenigstens eine Verbindung Chlor enthält und wobei die Dampfzusammensetzung dem später gewünschten Verhältnis von superparamagnetischen Domänen und der nichtmagnetischen Matrix entspricht,
- Zuführen dieses Gemisches in eine Mischzone, in der es mit Luft und/oder Sauerstoff und einem Brenngas gemischt wird und Zuführen des Gemisches in einen Brenner bekannter Bauart, und Verbrennen dieses Gemisches in einer Flamme innerhalb einer Verbrennungskammmer,
- Kühlen der heißen Gase und des festen Produktes, abtrennen der Gase vom festen Produkt und gegebenenfalls Reinigung des festen Produktes durch eine Wärmebehandlung mittels Wasserdampf angefeuchteter Gase.

Die Partikel können weiterhin durch ein Verfahren erhalten werden, umfassend die Schritte:
- Herstellen eines Aerosols durch Vernebelung eines Precursors, der die Metallkomponente der superparamagnetischen Domänen enthält und' der in Form einer Lösung oder einer Dispersion eines Salzes vorliegt,
- Mischen dieses Aerosols mit dem Gasgemisch einer Flammenhydrolyse oder einer Flammenoxidation, welches den Precursor der nichtmagnetischen Matrix enthält, in eine Mischzone, wobei die Dampfzusammensetzung dem später gewünschten Verhältnis von superparamagnetischen Domänen und der nichtmagnetischen Matrix entspricht,
- Zuführen des Aerosol-Gas-Gemisches in einen Brenner bekannter Bauart und Verbrennen dieses Gemisches in einer Flamme innerhalb einer Verbrennungskammmer,
- Kühlen der heißen Gase und des festen Produktes, abtrennen der Gase vom festen Produkt und gegebenenfalls Reinigung des festen Produktes durch eine Wärmebehandlung mittels Wasserdampf angefeuchteter Gase,
wobei der Precursor der superparamagnetischen Domänen und/oder der Precursor der nichtmagnetischen Matrix eine chlorhaltige Verbindung ist.

Die Partikel können ferner durch ein Verfahren erhalten werden, umfassend die Schritte:
- Gemeinsames oder getrenntes Herstellen eines Aerosols durch Vernebelung eines Precursors der superparamagnetischen Domänen und eines Precursors der nichtmagnetischen Matrix, wobei diese Precursoren in Form einer Lösung oder einer Dispersion von Salzen vorliegen, wobei die Aerosolzusammensetzung dem später gewünschten Verhältnis von superparamagnetischen Domänen und der nichtmagnetischen Matrix entspricht,
- Gemeinsames oder getrenntes Zuführen der Aerosole der Precursoren in eine Mischzone, in der sie mit Luft und/oder Sauerstoff und einem Brenngas gemischt werden und
- Zuführen des Aerosol-Gas-Gemisches in einen. Brenner bekannter Bauart und Verbrennen dieses Gemisches in einer Flamme innerhalb einer Verbrennungskammmer,
- Kühlen der heißen Gase und des festen Produktes, abtrennen der Gase vom festen Produkt und gegebenenfalls Reinigung des festen Produktes durch eine Wärmebehandlung mittels Wasserdampf angefeuchteter Gase,
wobei der Precursor der superparamagnetischen Domänen und/oder der Precursor der nichtmagnetischen Matrix eine chlorhaltige Verbindung ist.

Als Brenngase können bevorzugt Wasserstoff oder Methan eingesetzt werden.

Im Hinblick auf die Schweißbarkeit werden die dem erfindungsgemäßen Kunststoffmaterial zugrundeliegenden Polymermaterialien so gewählt, daß das Kunststoffmaterial thermoplastisch erweichbar ist. Das den Schweißverbund bewirkende Kunststoffmaterial kann vorzugsweise auf ein-oder zweikomponentigem Polyurethan, ein- oder zweikomponentigem Polyepoxid, ein- oder zweikomponentigem Siliconpolymer, silanmodifiziertem Polymer, Polyamid, (Meth)acrylatfunktionellem Polymer, Polyester, Polycarbonat, Cycloolefincopolymer, Polysiloxan, Poly(ether)sulfon, Polyetherketon, Polystyrol, Polyoxymethylen, Polyamidimid, Polytetrafluoroethylen, Polyvinylidenfluorid, Perfluorethylenpropylen-Copolymer, Perfluoralkoxy-Copolymer, Methacrylat/Butadien/StyrolCopolymer und/oder flüssigkristalliner Copolyester basieren.

Das nanoskalige, magnetische oxidische Partikel enthaltende Kunststoffmaterial wird bevorzugt in der Weise hergestellt, dass man die zugrundeliegenden Polymermaterialien in Pulver- oder Granulatform mit den nanoskaligen, magnetischen oxidischen Partikeln in Form eines Pulvers mischt, extrudiert, strangpresst und anschließend granuliert. Diese Form kann besonders für Polyamid-Polymere vorteilhaft sein.

Das Kunststoffmaterial liegt dann in Form eines Granulates vor, welches wiederum durch Extrusion zu Formkörpern, Halbzeugen, Platten, Folien und dergleichen mehr verarbeitet werden kann.

Neben Polymeren kann das Kunststoffmaterial gegebenenfalls noch polymerisierbare Monomere, Wasser oder organische Dispersionsmittel enthalten. Geeignete, organische Dispersionsmittel können beispielsweise ausgewählt werden unter Ölen, Fetten, Wachsen, Estern von C₆-C₃₀-Monocarbonsäuren mit ein-, zwei- oder dreiwertigen Alkoholen, gesättigten acyclischen und cyclischen Kohlenwasserstoffen, Fettsäuren, niedermolekularen Alkoholen, Fettalkoholen und Mischungen davon. Dazu zählen beispielsweise Paraffin und Paraffinöle, Mineralöle, lineare gesättigte Kohlenwasserstoffe mit in der Regel mehr als 8 Kohlenstoffatomen, wie Tetradecan, Hexadecan, Octadecan etc., cyclische Kohlenwasserstoffe, wie Cyclohexan und Decahydronaphthalin, Wachse, Ester von Fettsäuren, Siliconöle etc. Bevorzugt sind z. B. lineare und cyclische Kohlenwasserstoffe und Alkohole.

Das Kunststoffmaterial, das die nanoskaligen, magnetischen oxidische Partikel enthält, wird erfindungsgemäß als den Schweißverbund bewirkendes Mittel bei der Herstellung von Kunststoffverbundformkörper durch Schweißen im elektromagnetischen Wechselfeld eingesetzt.

Die zu fügenden Kunststoffformteile können ganz oder teilweise aus dem nanoskalige, magnetische oxidische Partikel enthaltenden Kunststoffmaterial bestehen.

Dabei besteht mindestens eines der zu fügenden Formteile zumindest im Bereich der Fügefläche aus diesem Kunststoffmaterial.

Die Herstellung der Kunststoffformkörper kann in an sich bekannter Weise und in beliebiger Formgestaltung erfolgen.

Partiell, etwa nur im Bereich der Fügeflächen mit den nanoskaligen, magnetischen oxidischen Partikeln versehene Foermkörper können beispielsweise durch Koextrusion oder sequentielle Koextrusion, Mehrschichtextrusion, mehrkomponentiges Spritzgiesen oder durch Beschichtung erhalten werden.

Die zu fügenden Vorformen können beispielsweise Komponenten von Hohlkörpern darstellen. Diese können dann zu zusammengesetzten Hohlkörpern wie Behälter, Rohre oder Leitungen verarbeitet werden, die direkt oder über Verbindungselemente wie Muffen, Fittinge oder Flansche verschweißt sind.

Das den Schweißverbund bewirkende Kunststoffmaterial kann auch separat etwa in Form von Platten oder Folien vorliegen, die zwischen flächige Kunststoffteile gebracht werden und diese als Schweißmittel verbinden.

Die so erhaltenen Kunststoffverbundformkörper liegen dann in Form von Mehrschichtverbunden aus flächig verschweißten Elementen wie Platten und/oder Folien vor.

In dem entsprechenden Verfahren werden die zu fügenden Kunststoffformkörper zumindest im Bereich der Fügefläche einem elektrischen, magnetischen oder elektromagnetischen Wechselfeld aussetzt, wobei das den Schweißverbund bewirkende Kunststoffmaterial auf Schmelztemperatur erhitzt wird.

Vorzugsweise wird zur Erhitzung ein elektromagnetisches Wechselfeld mit einer Frequenz im Bereich von 30 Hz bis 100 MHz angewendet. Geeignet sind die Frequenzen gebräuchlicher Induktoren, beispielsweise Mittelfrequenzen, in einem Bereich von 100 Hz bis 100 kHz oder Hochfrequenzen in einem Bereich von 10 kHz bis 60 MHz, insbesondere 50 kHz bis 3 MHz.

Die magnetischen und insbesondere die nanopartikulären Domänen der superparamagnetischen Partikel erlauben eine Ausnutzung des Energieeintrags zur Verfügung stehender elektromagnetischer Strahlung in besonders effektiver Weise.

Analoges gilt für eine Erwärmung durch elektromagnetische Wechselfelder einer Mikrowellenstrahlung. Vorzugsweise wird dabei Mikrowellenstrahlung mit einer Frequenz im Bereich von 0,3 bis 300 GHz eingesetzt. Zur Einstellung der Resonanzfrequenz wird vorzugsweise zusätzlich zur Mikrowellenstrahlung ein Gleichstrom-Magnetfeld mit einer Feldstärke im Bereich von etwa 0,001 bis 10 Tesla eingesetzt. Vorzugsweise liegt die Feldstärke in einem Bereich von 0,015 bis 0,045 Tesla und insbesondere 0,02 bis 0,06 Tesla.

### Beispiel 1

### Herstellung der superparamagnetischen Partikel

Partikel P-1:
0,57 kg/h SiCl₄ werden bei ca. 200°C verdampft und mit 4,1 Nm³/h Wasserstoff sowie 11 Nm³/h Luft in eine Mischzone eingespeist. Zusätzlich wird ein Aerosol, das aus einer 25 gewichtsprozentigen wässerigen Eisen(III)chloridlösung (1,27 kg/h) erhalten wird, mittels eines Traggases (3 Nm³/h Stickstoff) in die Mischzone innerhalb des Brenners eingebracht. Das homogen gemischte Gas-Aerosol-Gemisch verbrennt dort bei einer adiabaten Verbrennungstemperatur von etwa 1200°C und einer Verweilzeit von etwa 50 msec. Nach der Reaktion werden in bekannter Art die Reaktionsgase und das entstandene Partikelpulver abgekühlt und mittels eines Filter vom Abgasstrom abgetrennt. In einem weiteren Schritt werden durch Behandlung mit wasserdämpfhaltigem Stickstoff noch anhaftende Salzsäurereste vom Pulver entfernt.

Partikel P-2:
0,17 kg/h SiCl₄ werden bei ca. 200°C verdampft und mit 4,8 Nm/h Wasserstoff sowie 12,5 Nm³/h Luft in eine Mischzone eingespeist. Zusätzlich wird ein Aerosol, das aus einer 25 gewichtsprozentigen wässerigen Eisen(III)chloridlösung (2,16 kg/h) erhalten wird, mittels eines Traggases (3 Nm³/h Stickstoff) in die Mischzone innerhalb des Brenners eingebracht. Das homogen gemischte Gas-Aerosol-Gemisch verbrennt dort bei einer adiabaten Verbrennungstemperatur von etwa 1200°C und einer Verweilzeit von etwa 50 msec. Nach der Reaktion werden in bekannter Art die Reaktionsgase und das entstandene Partikelpulver abgekühlt und mittels eines Filter vom Abgasstrom abgetrennt. In einem weiteren Schritt werden durch Behandlung mit wasserdampfhaltigem Stickstoff noch anhaftende Salzsäurereste vom Pulver entfernt.

Partikel P-3:
0,57 kg/h des Matrix-Precursors SiCl₄ werden bei ca. 200°C verdampft und mit 4 Nm³/h Wasserstoff sowie 11 Nm³/h Luft und 1 Nm³/h Stickstoff in den Reaktor eingespeist.

Zusätzlich wird ein Aerosol bestehend aus den Domänenprecursoren, das aus einer wässerigen Eisen(II)chlorid-, Magnesium(II)-, Manganchloridlösung mittels einer Zweistoffdüse erhalten wird, mittels eines Traggases (3 Nm³/h Stickstoff) in den Reaktor eingebracht. Die wässerige Lösung enthält 1,8 Gew.-% MnCl₂ , 8,2 Gew.-% MgCl₂ und 14, 6 Gew.-% FeCl₂ .

Das homogen gemischte Gas-Aerosol-Gemisch strömt in den Reaktor und verbrennt dort bei einer adiabaten Verbrennungstemperatur von etwa 1350°C und einer Verweilzeit von etwa 70 msec.

Die Verweilzeit errechnet sich aus dem Quotienten des durchströmten Anlagenvolumens und des Betriebsvolumenstroms der Prozessgase bei adiabater Verbrennungstemperatur.

Nach der Flammenhydrolyse werden in bekannter Art die Reaktionsgase und das entstandene mit Zink-Magnesium-Ferrit dotierte Siliciumdioxid-Pulver abgekühlt und mittels eines Filter wird der Feststoff von dem Abgasstrom abgetrennt.

In einem weiteren Schritt werden durch Behandlung mit wasserdampfhaltigem Stickstoff noch anhaftende Salzsäurereste vom Pulver entfernt.

### Beispiel 2

### Herstellung superparamagnetische Partikel enthaltender Kunststoffmaterialien

### Beispiel 2.1

2 kg, Partikel P-1 aus Beispiel 1 werden mit 8 kg Polyamidgranulat (Vestamid® L1901; Bezeichnung nach ISO 1874-1: PA12, XN, 18-010; Degussa AG) in einem Doppelschneckenextruder ZE25-33D der Firma Berstorff bei 250°C und einem Durchsatz von 10 kg/h schmelzgemischt, stranggepresst und granuliert.

### Bespiel 2.2

2 kg Partikel P-1 aus Beispiel 1 werden mit 8 kg Polybutylenterephthalat-GranulatVestodur® X9407; Degussa AG in einem Doppelschneckenextruder ZE25-33D der Firma Berstorff bei 250°.C und einem Durchsatz von 10 kg/h schmelzgemischt, stranggepresst und granuliert.

### Beispiel 2.3

2 kg Partikel P-1 aus Beispiel 1 werden mit 8 kg Polypropylen-Copolymer-Granulat (Admer® QF551A; Mitsui Deutschland GmbH) in einem Doppelschneckenextruder ZE25-33D der Firma Berstorff bei 200°C und einem Durchsatz von 10 kg/h schmelzgemischt, stranggepresst und granuliert.

### Beispiel 2.4

2 kg Partikel P-1 aus Beispiel 1 werden mit 8 kg Polyamid-6-Granulat (Ultramid® B4; BASF AG) in einem Doppelschneckenextruder ZE25-33D der Firma Berstorff bei 250°C und einem Durchsatz von 10 kg/h schmelzgemischt, stranggepresst und granuliert.

### Beispiel 2.5

2 kg Partikel P-1 aus Beispiel 1 werden mit 8 kg Polyvinylidenfluorid (DYFLOR® X7394; Degussa AG) in einem Doppelschneckenextruder ZE25-33D der Firma Berstorff bei 250°C und einem Durchsatz von 10 kg/h schmelzgemischt, stranggepresst und granuliert.

### Beispiel 2.6

2. kg Partikel P-1 aus Beispiel 1 werden mit 8 kg Polyamidgranulat (Vestamid® D18; Degussa AG) in einem Doppelschneckenextruder ZE25-33D der Firma Berstorff bei 200°C und einem Durchsatz von 10 kg/h schmelzgemischt, stranggepresst und granuliert.

### Beispiel 2.7

2 Partikel P-2 aus Beispiel 1 werden mit 8 kg Polyamidgranulat (Vestamid® D18; Degussa AG)in einem Doppelschneckenextruder ZE25-33D der Firma Berstorff bei 200°C und einem Durchsatz von 10 kg/h schmelzgemischt, stranggepresst und granuliert.

### Beispiel 3

### Schweißen von Kunsstoffformkörpern im elektromagnetischen Wechselfeld

### Allgemeine Durchführung:

Die superparamagnetische Partikel enthaltenden Kunststoffmaterialien gemäß Beispielen 2.1 bis 2.7 wurden zu Platten der Stärke 1 mm extrudiert.

Eine jegliche solche Platte wurde zwischen je eine Platte des gleichen oder unterschiedlichen Kunststoff-Basismaterials (ohne superparamagnetische Partikel) gelegt und dieser Mehrschichtaufbau mit Klebeband fest umwickelt. Anschließend wurde der Mehrschichtaufbau in ein elektromagnetisches Wechselfeld für vorgegebene Zeiten bei 100% Leistungsaufnahme gegeben.

Die Induktorspule hatte dabei die folgenden Daten:
Abmessungen: 200 x 45 x 40 mm³ (L x B xH)
Material: Kupferrohr Vierkant 10 x 6 x 1 mm
Leistungsquerschnittsfläche: 28 mm²
Spulenzuführungslänge: 120 mm
Spulenwindungszahl: 3
Spulenwicklungslänge(eff.): 35 mm
Spulendurchmesser (Innen): 20 mm bis 40 mm
Spuleninnenfläche: 720 mm²
Induktivität (bei 100 kHz): ca. 270 nH
Arbeitsfreqenz: 323 kHz

Der verwendete Hochfrequenz-Halbleiter-Generator weist folgende folgenden Daten auf:
Hersteller: STS - Systemtechnik Skorna GmbH
Typenbezeichnung: STS Typ M260S
Klemmleistung: 6 kW
Induktivitätsbereich: 250 - 1200 nH
Arbeitsfrequenz: 150 - 400 kHz (323 kHz mit der verwendeten Induktorspule)

Nach dem Entfernen der Probe aus dem Wechselfeld wurde die Haftfestigkeit nach folgenden Noten beurteilt:
- 0: Keine Haftung.
- 1: Geringfügige Haftung.
- 2: Etwas Haftung; mit geringem Aufwand zu trennen.
- 3: Gute Haftung; nur mit großem Aufwand und gegebenenfalls mit Hilfe von Werkzeugen zu trennen
- 4: untrennbare Haftung; Trennung nur durch Kohäsionsbruch

### Beispiele:

| Mehrschichtaufbau mit: | | Schweißdauer | Haftungsnote |
|---|---|---|---|
| Vestamid® Beispiel Vestamid® L1901 | L1901 2.1 | 30 Sekunden | 4 |
| Vestamid® Beispiel Trogamid® X7323 | L1901 2.1 | 45 Sekunden | 4 |
| Vestamid® Beispiel Vestamid® D18 | L1901 2.1 | 30 Sekunden | 4 |
| Vestamid® Beispiel Vestodur® 2000 | L1901 2.2 | 45 Sekunden | 4 |
| DYFLOR® Beispiel Vestodur® 2000 | X7394 2.2 | 45 Sekunden | 4 |
| Vestamid® Beispiel Polypropylen | X7297 2.3 | 45 Sekunden | 4 |
| VestamidR® | X7297 | 45 Sekunden | 4 |
| Beispiel Ultramid® B4 | 2.3 | | |
| Vestamid® Beispiel Ultramid® B4 | D18 2.4 | 30 Sekunden | 4 |
| Vestamid® Beispiel Ultramid® B4 | X7297 2.5 | 45 Sekunden | 4 |
| Vestamid®. Beispiel Plexiglas® 8N | X7297 2.5 | 45 Sekunden | 4 |
| Vestamid® Beispiel DYFLOR® LE | X7297 2.5 | 45 Sekunden | 4 |
| Vestamid® Beispiel Vestamid® D18 | L1901 2.6 | 30 Sekunden | 4 |
| Vestamid® Beispiel Vestamid® D18 | L1901 2.7 | 30 Sekunden | 4 . |
| Vestamid® Beispiel PLEXIMID® 8815 | X7297 2.5 | 45 Sekunden | 4 |

## Patentansprüche

1. Durch Schweißen im elektromagnetischen Wechselfeld erhältliche Kunststoffverbundformkörper, wobei der Schweißverbund mit Hilfe eines Kunststoffmaterials erfolgt, das nanoskalige, magnetische oxidische Partikel enthält, **dadurch gekennzeichnet, dass** die nanoskaligen, magnetischen oxidischen Partikel nicht-agglomerierte superparamagnetische Domänen aufweisen und aus aggregierten Primärpartikeln bestehen, wobei die Primärpartikel aus magnetischen Metalloxid-Domänen mit einem Durchmesser von 2 bis 100 nm in einer nichtmagnetischen Metalloxid- oder Metalloidoxid-Matrix aufgebaut sind.

2. Kunststoffverbundformkörper nach Anspruch 1, **dadurch gekennzeichnet, dass** die nanoskaligen, magnetischen oxidischen Partikel aus aggregierten Primärpartikeln bestehen, wobei die Aggregatgröße der magnetischen oxidischen Partikel größer als 100 nm und kleiner als 1 µm ist.

3. Kunststoffverbundformkörper nach einem der Ansprüche 1 und 2, **dadurch gekennzeichnet, dass** die magnetischen Domänen der magnetischen oxidischen Partikel Eisenoxid enthalten.

4. Kunststoffverbundformkörper nach einem der Ansprüche 1 bis 3, **dadurch gekennzeichnet, dass** die magnetischen Domänen der superparamagnetischen oxidischen Partikel Ferrite enthalten.

5. Kunststoffverbundformkörper nach einem der Ansprüche 1 bis 4, **dadurch gekennzeichnet, dass** die magnetischen Domänen der superparamagnetischen oxidischen Partikel aus ternären Systemen der allgemeinen Formel (M^{a}_{1-x-y} M^{b}ₓFe_{y})^{II}Fe₂^{III}O₄ aufgebaut sind, mit M^{a} beziehungsweise M^{b} = Mangan, Kobalt, Nickel, Zink, Kupfer, Magnesium, Barium, Yttrium, Zinn, Lithium, Cadmium, Magnesium, Calcium, Strontium, Titan, Chrom, Vanadium, Niob oder Molybdän und x=0,05 bis 0,95, y=0 bis 0,95 und x+y≤1.

6. Kunststoffverbundformkörper nach einem der Ansprüche 1 bis 5, **dadurch gekennzeichnet, dass** der Anteil der magnetischen Domänen in den nanoskaligen, magnetischen oxidischen Partikeln 10 bis 90 Gew.-% beträgt.

7. Kunststoffverbundformkörper nach einem der Ansprüche 1 bis 6, **dadurch gekennzeichnet, dass** der Anteil der nanoskaligen, magnetischen oxidischen Partikel in dem den Schweißverbund bewirkenden Kunststoffmaterial 0,1 bis 40 Gew.-% in beträgt.

8. Kunststoffverbundformkörper nach einem der Ansprüche 1 bis 7, **dadurch gekennzeichnet, dass** das den Schweißverbund bewirkende Kunststoffmaterial thermoplastisch erweichbar ist.

9. Kunststoffverbundformkörper nach Anspruch 8, **dadurch gekennzeichnet, dass** das den Schweißverbund bewirkende Kunststoffmaterial auf ein- oder zweikomponentigem Polyurethan, ein- oder zweikomponentigem Polyepoxid, ein- oder zweikomponentigem Siliconpolymer, silanmodifiziertem Polymer, Polyamid, (Meth)acrylatfunktionellem Polymer, Polyester, Polycarbonat, Cycloolefincopolymer, Polysiloxan, Poly(ether)sulfon, Polyetherketon, Polystyrol, Polyoxymethylen, Polyamidimid, Polytetrafluoroethylen, Polyvinylidenfluorid, Perfluorethylenpropylen-Copolymer, Perfluoralkoxy-Copolymer, Methacrylat/Butadien/Styrol-Copolymer und/oder flüssigkristalliner Copolyester basiert.

10. Kunststoffverbundformkörper nach einem der Ansprüche 1 bis 9 in Form von zusammengesetzten Hohlkörpern wie Behälter, Rohre oder Leitungen, die direkt oder über Verbindungselemente wie Muffen, Fittinge oder Flansche verschweißt sind.

11. Kunststoffverbundformkörper nach einem der Ansprüche 1 bis 9 in Form von Mehrschichtverbunden aus flächig verschweißten Elementen wie Platten und/oder Folien.

12. Verfahren zur Herstellung eines Kunststoffverbundformkörpers durch Schweißen im elektromagnetischen Wechselfeld, wobei der Schweißverbund mit Hilfe eines Kunststoffmaterials erfolgt, das nanoskalige, magnetische oxidische Partikel enthält, die nicht-agglomerierte superparamagnetische Domänen aufweisen und aus aggregierten Primärpartikeln bestehen, wobei die Primärpartikel aus magnetischen Metalloxid-Domänen mit einem Durchmesser von 2 bis 100 nm in einer nichtmagnetischen Metalloxid- oder Metalloidoxid-Matrix aufgebaut sind.

13. Verfahren nach Anspruch 12, **dadurch gekennzeichnet, dass** mindestens eines der zu fügenden Formteile zumindest im Bereich der Fügefläche aus dem Kunststoffmaterial besteht, das nanoskalige, magnetische oxidische Partikel enthält.

14. Verfahren nach einem der Ansprüche 12 und 13, **dadurch gekennzeichnet, dass** man die zu fügenden Kunststoffformkörper zumindest im Bereich der Fügefläche einem elektrischen, magnetischen oder elektromagnetischen Wechselfeld aussetzt, wobei das den Schweißverbund bewirkende Kunststoffmaterial auf Schmelztemperatur erhitzt wird.

15. Verwendung von nanoskaligen, magnetischen oxidischen Partikeln, die nicht-agglomerierte superparamagnetische Domänen aufweisen und aus aggregierten Primärpartikeln bestehen, wobei die Primärpartikel aus magnetischen Metalloxid-Domänen mit einem Durchmesser von 2 bis 100 nm in einer nichtmagnetischen Metalloxid- oder Metalloidoxid-Matrix aufgebaut sind, als Additiv in Kunststoffmaterialien, um diese im elektromagnetischen Wechselfeld schweißbar zu machen.

## Claims

1. Plastics composite mouldings obtainable via welding in an alternating electromagnetic field, where the weld is obtained with the aid of a plastics material which comprises nano-scale, magnetic oxidic particles **characterized in that** the nano-scale, magnetic oxidic particles have non-agglomerated superparamagnetic domains and are composed of aggregated primary particles, where the primary particles are composed of magnetic metal oxide domains whose diameter is from 2 to 100 nm in a non-magnetic metal oxide matrix or non-magnetic metalloid oxide matrix.

2. Plastics composite mouldings according to Claim 1, **characterized in that** the nano-scale, magnetic oxidic particles are composed of aggregated primary particles, where the aggregate size of the magnetic oxidic particles is greater than 100 nm and smaller than 1 µm.

3. Plastics composite mouldings according to either of Claims 1 and 2, **characterized in that** the magnetic domains of the magnetic oxidic particles comprise iron oxide.

4. Plastics composite mouldings according to any of Claims 1 to 3, **characterized in that** the magnetic domains of the superparamagnetic oxidic particles comprise ferrites.

5. Plastics composite mouldings according to any of Claims 1 to 4, **characterized in that** the magnetic domains of the superparamagnetic oxidic particles are composed of ternary systems of the general formula (M^{a}_{1-x-y}M^{b}ₓFe_{y})^{II}Fe₂^{III}O₄ where M^{a} or M^{b} = manganese, cobalt, nickel, zinc, copper, magnesium, barium, yttrium, tin, lithium, cadmium, calcium, strontium, titanium, chromium, vanadium, niobium or molybdenum and x = from 0.05 to 0.95, y = from 0 to 0.95 and x + y ≤ 1.

6. Plastics composite mouldings according to any of Claims 1 to 5, **characterized in that** the proportion of the magnetic domains in the nano-scale, magnetic oxidic particles is from 10 to 90% by weight.

7. Plastics composite mouldings according to any of Claims 1 to 6, **characterized in that** the proportion of the nano-scale, magnetic oxidic particles in the plastics material that generates the weld is from 0.1 to 40% by weight.

8. Plastics composite mouldings according to any of Claims 1 to 7, **characterized in that** the plastics material that generates the weld is thermoplastically softenable.

9. Plastics composite mouldings according to Claim 8, **characterized in that** the plastics material that generates the weld is based on single- or two-component polyurethane, single- or two-component polyepoxide, single- or two-component silicone polymer, silane-modified polymer, polyamide, (meth)acrylate-functional polymer, polyester, polycarbonate, cycloolefin copolymer, polysiloxane, poly(ether) sulphone, polyether ketone, polystyrene, polyoxymethylene, polyamideimide, polytetrafluoroethylene, polyvinylidene fluoride, perfluoroethylene-propylene copolymer, perfluoroalkoxy copolymer, methacrylate/butadiene/styrene copolymer and/or liquid-crystalline copolyester.

10. Plastics composite mouldings according to any of Claims 1 to 9 in the form of assembled hollow bodies, such as containers, tubes or lines, which have been welded directly or by way of connecting elements, such as sleeves, fittings or flanges.

11. Plastics composite mouldings according to any of Claims 1 to 9 in the form of multilayer composites composed of elements welded in the manner of sheets, examples being sheets and/or foils.

12. Process for the production of a plastics composite moulding via welding in an alternating electromagnetic field, where the weld is achieved with the aid of a plastics material which comprises nano-scale, magnetic oxidic particles which have non-agglomerated superparamagnetic domains and are composed of aggregated primary particles, where the primary particles are composed of magnetic metal oxide domains whose diameter is from 2 to 100 nm in a non-magnetic metal oxide matrix or non-magnetic metalloid oxide matrix.

13. Process according to Claim 12, **characterized in that** at least one of the mouldings to be joined is composed at least in the region of the joint area of the plastics material which comprises nano-scale, magnetic oxidic particles.

14. Process according to either of Claims 12 and 13, **characterized in that** the plastics mouldings to be joined are exposed at least in the region of the joint area to an alternating electrical, magnetic or electromagnetic field, where the plastics material that generates the weld is heated to melting point.

15. Use of nano-scale, magnetic oxidic particles as additives in plastics materials, where these particles have non-agglomerated superparamagnetic domains and are composed of aggregated primary particles, and where the primary particles are composed of magnetic metal oxide domains whose diameter is from 2 to 100 nm in a non-magnetic metal oxide matrix or non-magnetic metalloid oxide matrix, in order to provide weldability of the same in an alternating electromagnetic field.

## Revendications

1. Corps moulés composites plastiques pouvant être obtenus par soudage dans un champ électromagnétique alternatif, la liaison par soudage ayant lieu à l'aide d'un matériau plastique qui contient des particules oxydiques magnétiques nanométriques, **caractérisés en ce que** les particules oxydiques magnétiques nanométriques comportent des domaines super-paramagnétiques non agglomérés et sont constituées de particules primaires agrégées, les particules primaires étant formées à partir de domaines magnétiques d'oxyde métallique d'un diamètre de 2 à 100 nm dans une matrice non magnétique d'oxyde métallique ou d'oxyde métalloïde.

2. Corps moulés composites plastiques selon la revendication 1, **caractérisés en ce que** les particules oxydiques magnétiques nanométriques sont constituées de particules primaires agrégées, la taille d'agrégat des particules oxydiques magnétiques étant supérieure à 100 nm et inférieure à 1 µm.

3. Corps moulés composites plastiques selon l'une quelconque des revendications 1 et 2, **caractérisés en ce que** les domaines magnétiques des particules oxydiques magnétiques contiennent de l'oxyde de fer.

4. Corps moulés composites plastiques selon l'une quelconque des revendications 1 à 3, **caractérisés en ce que** les domaines magnétiques des particules oxydiques super-paramagnétiques contiennent des ferrites.

5. Corps moulés composites plastiques selon l'une quelconque des revendications 1 à 4, **caractérisés en ce que** les domaines magnétiques des particules oxydiques super-paramagnétiques sont formés à partir de systèmes ternaires de formule générale (M^{a}_{1-x-y}M^{b}ₓFe_{y})^{II}Fe₂^{III}O₄, avec M^{a} et M^{b}= manganèse, cobalt, nickel, zinc, cuivre, magnésium, baryum, yttrium, étain, lithium, cadmium, calcium, strontium, titane, chrome, vanadium, niobium ou molybdène et x = 0,05 à 0,95, y = 0 à 0,95 et x + y ≤ 1.

6. Corps moulés composites plastiques selon l'une quelconque des revendications 1 à 5, **caractérisés en ce que** la proportion des domaines magnétiques dans les particules oxydiques magnétiques nanométriques est de 10 à 90 % en poids.

7. Corps moulés composites plastiques selon l'une quelconque des revendications 1 à 6, **caractérisés en ce que** la proportion des particules oxydiques magnétiques nanométriques dans le matériau plastique qui produit la liaison par soudage est de 0,1 à 40 % en poids.

8. Corps moulés composites plastiques selon l'une quelconque des revendications 1 à 7, **caractérisés en ce que** le matériau plastique qui produit la liaison par soudage est ramollissable thermoplastiquement.

9. Corps moulés composites plastiques selon la revendication 8, **caractérisés en ce que** le matériau plastique qui produit la liaison par soudage est à base d'un polyuréthane mono- ou bicomposant, d'un polyépoxyde mono- ou bicomposant, d'un polymère de silicone mono- ou bicomposant, d'un polymère modifié par du silane, d'un polyamide, d'un polymère à fonction (méth)acrylate, d'un polyester, d'un polycarbonate, d'un copolymère de cyclooléfine, d'un polysiloxane, d'une poly(éther)-sulfone, d'une polyéther-cétone, d'un polystyrène, d'un polyoxyméthylène, d'un polyamideimide, d'un polytétrafluoroéthylène, d'un polyfluorure de vinylidène, d'un copolymère perfluoroéthylène-propylène, d'un copolymère de perfluoroalcoxy, d'un copolymère méthacrylate/butadiène/styrène et/ou d'un copolyester cristallin liquide.

10. Corps moulés composites plastiques selon l'une quelconque des revendications 1 à 9, sous la forme de corps creux composés tels que des contenants, des tubes ou des conduites, qui sont soudés directement ou par le biais d'éléments de liaison tels que des manchons, des raccords ou des brides.

11. Corps moulés composites plastiques selon l'une quelconque des revendications 1 à 9, sous la forme de composites multicouches à base d'éléments soudés à plat tels que des plaques et/ou des films.

12. Procédé de fabrication d'un corps moulé composite plastique par soudage dans un champ électromagnétique alternatif, la liaison par soudage ayant lieu à l'aide d'un matériau plastique qui contient des particules oxydiques magnétiques nanométriques, qui comportent des domaines super-paramagnétiques non agglomérés et sont constituées de particules primaires agrégées, les particules primaires étant formées à partir de domaines magnétiques d'oxyde métallique d'un diamètre de 2 à 100 nm dans une matrice non magnétique d'oxyde métallique ou d'oxyde métalloïde.

13. Procédé selon la revendication 12, **caractérisé en ce qu'**au moins une des pièces moulées à assembler est constituée du matériau plastique contenant des particules oxydiques magnétiques nanométriques au moins dans la zone de la surface d'assemblage.

14. Procédé selon l'une quelconque des revendications 12 et 13, **caractérisé en ce que** les corps moulés plastiques à assembler sont exposés à un champ électrique, magnétique ou électromagnétique alternatif au moins dans la zone de la surface d'assemblage, le matériau plastique qui produit la liaison par soudage étant porté à sa température de fusion.

15. Utilisation de particules oxydiques magnétiques nanométriques qui comportent des domaines super-paramagnétiques non agglomérés et sont constituées de particules primaires agrégées, les particules primaires étant formées à partir de domaines magnétiques d'oxyde métallique d'un diamètre de 2 à 100 nm dans une matrice non magnétique d'oxyde métallique ou d'oxyde métalloïde, en tant qu'additif dans des matériaux plastiques pour rendre ceux-ci soudables dans un champ électromagnétique alternatif.
